# EUROPÄISCHE PATENTSCHRIFT

(11) **EP 1 468 052 B1**
(45) Veröffentlichungstag und Bekanntmachung des Hinweises auf die Patenterteilung: **16.12.2009**
(21) Anmeldenummer: 03704398.1
(22) Anmeldetag: 15.01.2003
(51) Int. Cl.: C09D 5/08, C09D 5/10, C09D 5/24, C09D 5/03

(54) **BESCHICHTUNGSSTOFFE UND IHRE VERWENDUNG ZUR HERSTELLUNG SCHWEISSBARER BESCHICHTUNGEN**
COATING MATERIALS AND THE USE THEREOF FOR PRODUCING COATINGS WHICH CAN BE SOLDERED
MATIERES DE REVETEMENT ET LEUR UTILISATION POUR LA PRODUCTION DE REVETEMENTS A SOUDER

(30) Priorität: 24.01.2002 DE 10202543
(43) Veröffentlichungstag der Anmeldung: 20.10.2004
(73) Patentinhaber: BASF Coatings AG, 48165 Münster (DE)
(72) Erfinder: HINTZE-BRÜNING, Horst, 48165 Münster (DE); JANDEL, Lothar, 48165 Münster (DE); NEUHAUS, Ralf, 48317 Drensteinfurt (DE); RUCKPAUL, Markus, 69124 Heidelberg (DE); BÄUMER, Marc, Münster 48165 (DE)
(74) Vertreter: Leifert & Steffan
(86) Internationale Anmeldenummer: PCT/EP2003/000320
(87) Internationale Veröffentlichungsnummer: WO 2003/062327

(56) Entgegenhaltungen:
- EP-A- 0 760 387
- DE-A- 10 022 075
- DE-A- 19 623 268
- US-A- 4 724 172
- US-A- 4 837 253
- US-A- 5 874 197
- US-A- 6 126 730

## Beschreibung

Die vorliegende Erfindung betrifft neue Beschichtungsstoffe, insbesondere Coil-Coating-Lacke. Außerdem betrifft die vorliegende Erfindung die Verwendung der neuen Beschichtungsstoffe für die Herstellung schweißbarer Beschichtungen, insbesondere auf Coils.

Coil-Coating-Lacke, die überwiegend im Walzenauftrag mit gegenläufigen Walzen auf Stahlbänder, insbesondere verzinkte Stahlbänder, oder Aluminiumbänder aufgetragen werden, sind bekannt. Da die Metallverarbeitung erst nach dem Lackieren erfolgt, müssen die Beschichtungen extrem hohe mechanische Beständigkeit aufweisen. Typische Trocknungszeiten sind 20 bis 40 Sekunden bei einer Metalltemperatur von 200 bis 260 °C. Üblicherweise werden die beschichteten Coils im Baubereich für die Herstellung von Decken- und Wandelementen, Türen, Rohrisolierungen, Rollläden oder Fensterprofilen, im Fahrzeugbereich für die Herstellung von Verkleidungen von Caravans oder Nutzfahrzeugaufbauten und im Haushaltsbereich für die Herstellung von Profilelementen für Wasch- und Geschirrspülmaschinen, Gefrierschränke, Kühlschränke oder Herde verwendet (vgl. Römpp Lexikon Lacke und Druckfarben, Georg Thieme Verlag, Stuttgart, New York, 1998, »Bandbeschichtung«, Seite 55, und »Coil-Coating-Lacke«, Seite 116).

Die US 4,724,172 beschreibt z.B. korrosions- und oxidationsbeständige Beschichtungen, enthaltend Phosphat, Chromat oder Molybdat und Aluminiumpulver, die auf Stahl aufgetragen werden können. Die Bindemittel dieses Dokumentes sind keine Bindemittel im Sinne der vorliegenden Erfindung, sondern an sich Gemische aus z.B. Phosphorsäure, Chromsäure und Magnesiumoxid.

Um die Herstellung von Kraftfahrzeugen weiter technisch zu vereinfachen und wirtschaftlicher zu gestalten, ist man bestrebt, vorgeformte, beschichtete Profilelemente und Formteile für die Herstellung von Karosserien einzusetzen. Dazu ist es aber erforderlich, dass die beschichteten Coils und die hieraus hergestellten Profilelemente und Formteile punktschweißbar sind.

Außerdem soll mit den vorgeformten, beschichteten Profilelementen und Formteilen der Korrosionsschutz für die Karosserien weiter verbessert werden, sodass Korrosionsschutzmaßnahmen, wie das Hohlraumfluten mit Wachs, überflüssig werden. Außerdem wird gefordert, dass die Korrosionsschutzwirkung von kathodisch abgeschiedenen und thermisch gehärteten Elektrotauchlackierungen auf Coils weiter verbessert wird oder dass ganz auf die Elektrotauchlackierungen verzichtet werden kann.

Aufgabe der vorliegenden Erfindung ist es, neue coil-coating-lacke, bereitzustellen, die neue Beschichtungen liefern, die eine extrem hohe mechanische Beständigkeit und eine besonders gute Schweißbarkeit, insbesondere Punktschweißbarkeit, aufweisen. Außerdem sollen sich die neuen Coil-Coating-Lacke, im Bedarfsfall mit Korrosionsschutzpigmenten ausrüsten lassen, sodass die hieraus hergestellten neuen Beschichtungen auch noch eine besonders hohe Korrosionsschutzwirkung entfalten, ohne dass die Schweißbarkeit hierdurch beeinträchtigt wird. Dabei sollen die neuen, Coil-Coating-Lacke, neue Beschichtungen liefern, die bessere Schweißpunkte mit einem glatten, ästhetisch noch immer ansprechenden Umkreis bewirken. Außerdem sollen die Schweißverbindungen besonders fest sein. Die neuen Beschichtungen sollen außerdem einen vergleichsweise breiten Schweißbereich und einen vergleichsweise niedrigen Durchgangswiderstand haben und, was die Schweißelektroden betrifft, eine besonders hohe Standmenge bewirken.

Demgemäß wurden die neuen Coil-Coating-Lacke gefunden, enthaltend mindestens ein elektrisch leitfähige Pigment (A 1) mit mindestens bimodaler Teilchengrößenverteilung und mindestens ein Bindemittel, wobei das Pigment/Bindemittel Gewichtsverhältnis >1,5 :1 ist. Im Folgenden werden die neuen Coil-Coating-Lacke als »erfindungsgemäße Coil-Coating-Lacke« bezeichnet.

Weitere Erfindungsgegenstände gehen aus der Beschreibung hervor.

Im Hinblick auf den Stand der Technik war es überraschend und für den Fachmann nicht vorhersehbar, dass die Aufgabe, wie der vorliegenden Erfindung zugrundelag, mit Hilfe des erfindungsgemäßen Beschichtungsstoffs gelöst werden konnte. Insbesondere war es überraschend, dass die erfindungsgemäßen Coil-Coating-Lacke, erfindungsgemäße Beschichtungen lieferten, die eine extrem hohe mechanische Beständigkeit und eine besonders gute Schweißbarkeit, insbesondere Punktschweißbarkeit, aufwiesen. Außerdem ließen sich die erfindungsgemäßen Coil-Coating-Lacke, mit Korrosionsschutzpigmenten ausrüsten, sodass die hieraus hergestellten erfindungsgemäßen Beschichtungen auch noch eine besonders hohe Korrosionsschutzwirkung entfalteten, ohne dass die Schweißbarkeit hierdurch beeinträchtigt wurde. Dabei lieferten die erfindungsgemäßen Coil-Coating-Lacke, erfindungsgemäße Beschichtungen, die bessere Schweißpunkte mit einem glatteren, ästhetisch noch immer ansprechenden Umkreis bewirkten. Außerdem waren die Schweißverbindungen besonders fest. Die erfindungsgemäßen Beschichtungen wiesen außerdem einen vergleichsweise breiten Schweißbereich und einen vergleichsweise niedrigen Durchgangswiderstand auf und bewirkten, was die Schweißelektroden betraf, eine besonders hohe Standmenge, d. h., die Anzahl der Schweißpunkte, die mit einer Elektrode gesetzt werden konnten, war sehr hoch.

Die erfindungswesentliche Bestandteil der erfindungsgemäßen Coil-Coating-Lacke mindestens ein elektrisch leitfähiges Pigment (A 1) mit mindestens bimodaler, insbesondere bimodaler Teilchengrößenverteilung, wobei das Pigment/Bindemitte Gewichtsverhältnis >1,5 :1, vorzugsweise > 2,4 : 1 und bevorzugt > 2,8 : 1 ist. Bevorzugt liegt die oberen Grenze des Pigment/Bindemittel Gewichtsverhältnis bei 4 : 1. Besonders bevorzugt liegt das Pigment/Bindemittel Gewichtsverhältnis bei 2,9 : 1 bis 3,2:1.

Die mittleren Teilchengrößen des elektrisch leitfähigen Pigments (A 1) können breit variieren. Vorzugsweise liegen sie zwischen 0,5 und 50, insbesondere 1 bis 30 µm. Dabei haben 90 Gew.% des feinteiligeren Anteils des elektrisch leitfähigen Pigments (A1) vorzugsweise eine mittlere Teilchengröße von 1 bis 20, insbesondere 3 bis 16 µm. 90 Gew.% des grobteiligeren Anteils des elektrisch leitfähigen Pigments (A1) haben vorzugsweise eine mittlere Teilchengröße von 3 bis 30, insbesondere 5 bis 22 µm.

Das Gewichtsverhältnis von feinteiligerem Anteil zu grobteiligerem Anteil kann breit variieren und liegt vorzugsweise bei 1,4 : 1 bis 1 : 1,4, bevorzugt 1,3 : 1 bis 1 : 1,3, besonders bevorzugt 1,2 : 1 bis 1 : 1,2 und insbesondere 1:1.

Der Gehalt der erfindungsgemäßen Coil-Coating-Lacke an den elektrisch leitfähigen Pigmenten (A 1) kann breit variieren und richtet sich nach den Erfordernissen des Einzelfalls, insbesondere nach der für eine sehr gute Schweißbarkeit notwendigen elektrischen Leitfähigkeit der erfindungsgemäßen Beschichtungen. Vorzugsweise sind die elektrisch leitfähigen Pigmente (A 1) in den erfindungsgemäßen Coil-Coating-Lacke in einer Menge von 10 bis 80, bevorzugt 15 bis 75, besonders bevorzugt 20 bis 75 und insbesondere 30 bis 75 Gew.%, jeweils bezogen auf den Festkörper erfindungsgemäßen Coil-Coating-Lacke, enthalten.

Als elektrisch leitfähige Pigmente (A 1) kommen die unterschiedlichsten organischen und anorganischen Pigmente in Betracht. Vorzugsweise werden die Pigmente (A 1) aus der Gruppe, bestehend aus elementarem Silizium und metallischen, wasserunlöslichen Phosphiden, bevorzugt aus der Gruppe, bestehend aus CrP, MnP, Fe₃P, Fe₂P, Ni₂P, NiP₂ und NiP₃, ausgewählt. Insbesondere werden Eisenphosphide (A 1) eingesetzt.

Die Eisenphosphide sind handelsübliche Produkte und werden beispielsweise unter der Marke Ferrophos ® (feinteilig: Ferrophos ® HRS 2132; grobteilig: Ferrophos ® HRS 2131) vertrieben.

Die Pigmente (A 1) werden an sich bekannten Beschichtungsstoffen zugesetzt. Bei diesen kann es sich um Einkomponenten- und Mehrkomponentensysteme, insbesondere Zweikomponentensysteme, handeln. Die erfindungsgemäßen Coil-Coating-Lacke können auf der Basis organischer Lösemittel (konventionelle Coil-Coating-Lacke) oder wäßriger Medien (wässrige Coil-Coating-Lacke) formuliert werden. Sie können aber auch im wesentlichen oder völlig lösemittel- und wasserfreie flüssige Coil-Coating-Lacke (100%-Systeme) oder im wesentlichen oder völlig lösemittel- und wasserfreie, feste, pulverförmige Coil-Coating-Lacke (Pulverlacke) sein. Die Pulverlacke können auch in der Form von wäßrigen Dispersionen vorliegen, die auch als Pulverslurries bezeichnet werden.

Die erfindungsgemäßen Coil-Coating-Lacke können thermisch, mit aktinischer Strahlung oder thermisch und mit aktinischer Strahlung gehärtet werden. Unter aktinischer Strahlung wird hier und im folgenden elektromagnetische Strahlung, wie nahes Infrarot, sichtbares Licht, UV-Strahlung oder Röntgenstrahlung, insbesondere UV-Strahlung, oder Korpuskularstrahlung, wie Elektronenstrahlung, verstanden. Die gemeinsame Härtung mit Hitze und aktinischer Strahlung wird von der Fachwelt auch als Dual-Cure bezeichnet.

Die erfindungsgemäßen Coil-Coating-Lacke können für das Lackieren von Kraftfahrzeugkarosserien und Teilen hiervon, Kraftfahrzeugen im Innen- und Außenbereich, Bauwerken im Innen- und Außenbereich, Türen, Fenstern und Möbeln sowie im Rahmen der industriellen Lackierung für das Lackieren von Kleinteilen, Coils, Container, Emballagen, elektrotechnischen Bauteilen und weißer Ware verwendet werden.

Diese außerordentlich breite Verwendbarkeit der erfindungsgemäßen Coil-Coating-Lacke stellt einen besonderen Vorteil dar.

Die erfindungsgemäßen Coil-Coating-Lacke (nachstehend der Kürze halber »erfindungsgemäße Lacke genannt) können ebenfalls Einkomponenten- und Mehrkomponentensysteme, insbesondere Zweikomponentensysteme, sein; vorzugsweise sind sie Einkomponentensysteme. Sie können auf der Basis organischer Lösemittel oder wäßriger. Medien formuliert werden. Sie können aber auch im wesentlichen oder völlig lösemittel- und wasserfreie flüssige Lacke (100%-Systeme) oder im wesentlichen oder völlig lösemittel- und wasserfreie Pulverlacke sein. Die Pulverlacke können auch in der Form von Pulverslurries vorliegen. Ganz besonders bevorzugt werden konventionelle erfindungsgemäße Lacke verwendet.

Die erfindungsgemäßen Lacke können thermisch, mit aktinischer Strahlung oder thermisch und mit aktinischer Strahlung gehärtet werden. Vorzugsweise werden sie thermisch gehärtet. Dabei können sie thermisch selbstvemetzend oder fremdvemetzend sein. Vorzugsweise sind die fremdvernetzend.

Außer der erfindungsgemäßen Mischung enthalten die erfindungsgemäßen Lacke Bestandteile, wie sie auf dem Gebiet der Coil-Coating-Lacke üblich und bekannt sind, wie Bindemittel, Vernetzungsmittel, organische Lösemittel und Zusatzstoffe.

Vorzugsweise werden die Bindemittel aus der Gruppe, bestehend aus physikalisch, thermisch, mit aktinischer Strahlung sowie thermisch und mit aktinischer Strahlung härtbaren, statistisch, alternierend und blockartig aufgebauten, linearen, verzweigten und kammartig aufgebauten (Co)Polymerisaten von ethylenisch ungesättigten Monomeren, Polyadditionsharzen und/oder Polykondensationsharzen, ausgewählt. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze« verwiesen.

Bevorzugt werden die Bindemittel aus der Gruppe, bestehend aus (Meth)Acrylat(co)polymerisaten, partiell verseiften Polyvinylestern, Polyestern, Alkyden, Polylactonen, Polycarbonaten, Polyethern, Epoxidharz-Amin-Addukten, Polyharnstoffen, Polyamiden, Polyimiden und Polyurethanen, inbesondere Polyestern, ausgewählt.

Die Herstellung von Polyestern wird beispielsweise in dem Standardwerk Ullmanns Encyklopädie der technische Chemie, 3. Auflage, Band 14, Urban & Schwarzenberg, München, Berlin, 1963, Seiten 80 bis 89 und Seiten 99 bis 105, sowie in den Büchern: "Résines Alkydes-Polyesters" von J. Bourry, Paris, Verlag Dunod, 1952, "Alkyd Resins" von C. R. Martens, Reinhold Publishing Corporation, New York, 1961, sowie "Alkyd Resin Technology" von T. C. Patton, Intersience Publishers, 1962, beschrieben.

Die selbstvernetzenden Bindemittel der thermisch härtbaren erfindungsgemäßen Lacke und der erfindungsgemäßen Dual-Cure-Lacke enthalten reaktive funktionelle Gruppen, die mit Gruppen ihrer Art. ("mit sich selbst") oder mit komplementären reaktiven funktionellen Gruppen Vernetzungsreaktionen eingehen können.

Die fremdvernetzenden Bindemittel enthalten reaktive funktionelle Gruppen, die mit komplementären reaktiven funktionellen Gruppen, die in Vernetzungsmitteln vorliegen, Vernetzungsreaktionen eingehen können (vgl. auch Römpp Lexikon Lacke und Druckfarben, Georg Thieme Verlag, Stuttgart, New York, 1998, »Härtung«, Seiten 274 bis 276, insbesondere Seite 275).

Beispiele geeigneter erfindungsgemäß zu verwendender komplementäre reaktiver funktioneller Gruppen sind in der folgenden Übersicht zusammengestellt. In der Übersicht steht die Variable R⁴ für einen acyclischen oder cyclischen aliphatischen, einen aromatischen und/oder einen aromatisch-aliphatischen (araliphatischen) Rest; die Variablen R⁵ und R⁶ stehen für gleiche oder verschiedene aliphatische Reste oder sind miteinander zu einem aliphatischen oder heteroaliphatischen Ring verknüpft.

### Übersicht: Beispiele komplementärer reaktiver funktioneller Gruppen

| **Bindemittel und Vernetzungsmittel** **oder** **Vernetzungsmittel und Bindemittel** | |
|---|---|
| -SH | -C(O)-OH |
| -NH₂ | -C(O)-O-C(O)- |
| -OH | -NCO |
| -O-(CO)-NH-(CO)-NH₂ | -NH-C(O)-OR⁴ |
| -O-(CO)-NH₂ | -CH₂-OH |
| >NH | -CH₂-OR⁴ |
| | -NH-CH₂-OR⁴ |
| | -NH-CH₂-OH |
| | -N(-CH₂-OR⁴)₂ |
| | -NH-C(O)-CH(-C(O)OR⁴)₂ |
| | -NH-C(O)-CH(-C(O)OR⁴)(-C(O)-R⁴) |
| | -NH-C(O)-NR⁵R⁶ |
| | > Si(OR⁴)₂ |
| | 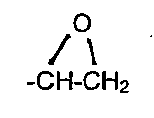 |
| | 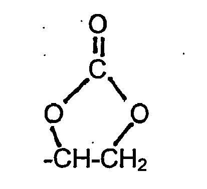 |
| -C(O)-OH | 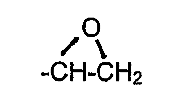 |
| | -N=C=N- |
| | -C(O)-N(CH₂-CH₂-OH)₂ |

Die Auswahl der jeweiligen komplementären Gruppen richtet sich zum einen danach, daß sie bei der Herstellung, der Lagerung und der Applikation der erfindungsgemäßen Lacke keine unerwünschten Reaktionen, insbesondere keine vorzeitige Vernetzung, eingehen und/oder gegebenenfalls die Härtung mit aktinischer Strahlung nicht stören oder inhibieren dürfen, und zum anderen danach, in welchem Temperaturbereich die Vernetzung stattfinden soll.

Vorzugsweise werde bei den erfindungsgemäßen Lacken Vemetzungstemperaturen bis zu 270°C angewandt. Es werden daher vorzugsweise Thio-, Hydroxyl-, N-Methylolamino- N-Alkoxymethylamino-, Imino-, Carbamat-, Allophanat- und/oder Carboxylgruppen, bevorzugt Hydroxyl- oder Carboxylgruppen, einerseits und vorzugsweise Vernetzungsmittel mit Anhydrid-, Carboxyl-, Epoxyd-, blockierten Isocyanat-, Urethan-, Methylol-, Methylolether-, Siloxan-, Carbonat-, Amino-, Hydroxy- und/oder beta-Hydroxyalkylamidgruppen, bevorzugt Epoxy-, beta-Hydroxyalkylamid-, blockierte Isocyanat-, Urethan- oder Alkoxymethylaminogruppen, andererseits angewandt.

Im Falle selbst vernetzen der erfindungsgemäßer Lacke enthalten die Bindemittel insbesondere Methylol-, Methylolether- und/oder N-Alkoxymethylaminogruppen.

Komplementäre reaktive funktionelle Gruppen, die für die Verwendung in den fremdvernetzenden erfindungsgemäßen Lacken besonders gut geeignet sind, sind
- Carboxylgruppen einerseits und Epoxidgruppen und/oder beta-Hydroxyalkylamidgruppen andererseits sowie.
- Hydroxylgruppen einerseits und blockierte Isocyanat-, Urethan-oder Alkoxymethylaminogruppen, insbesondere blockierte Isocyanatgruppen, andererseits.

Die Funktionalität der Bindemittel bezüglich der vorstehend beschriebenen reaktiven funktionellen Gruppen kann sehr breit variieren und richtet sich insbesondere nach der Vemetzungsdichte, die man erzielen will, und/oder nach der Funktionalität der jeweils angewandten Vernetzungsmittel. Beilspielsweise, liegt im Falle carboxylgruppenhaltiger Bindemittel die Säurezahl vorzugsweise bei 10 bis 100, bevorzugt 15 bis 80, besonders Bevorzugt 20 bis 75, ganz besonders bevorzugt 25 bis 70 und insbesondere 30 bis 65 mg KOH/g. Oder im Falle hydroxylgruppenhaltiger Bindemittel liegt die OH-Zahl vorzugsweise bei 15 bis 300, bevorzugt 20 bis 250, besonders bevorzugz 25 bis 200, ganz besonders bevorzugt 30 bis 150 und insbesondere 35 bis 120 mg KOH/g. Oder im Falle epoxidgruppenhaltiger Bindemittel liegt das Epoxidäquivalentgewicht vorzugsweise bei 400 bis 2.500, bevorzugt 420 bis 2.200, besonders bevorzugt 430 bis 2.100, ganz besonders bevorzugt 440 bis 2.000 und indesondere 440 bis 1.900.

Die vorstehend beschriebenen komplementären funktionellen Gruppen können nach den üblichen und bekannten Methoden der Polymerchemie in die Bindemittel eingebaut werden. Dies kann beispielsweise durch den Einbau von Monomeren, die die entsprechenden reaktiven funktionellen Gruppen tragen, und/oder mit Hilfe polymeranaloger Reaktionen geschehen.

Die Bindemittel der erfindungsgemäßen Dual-Cure-Lacke und der rein mit aktinischer Strahlung härtbaren erfindungsgemäßen Lacke enthalten des Weiteren im statistischen Mittel mindestens eine, vorzugsweise mindestens zwei, Gruppe(n) mit mindestens einer mit aktinischer Strahlung aktivierbaren Bindung pro Molekül.

Im Rahmen der vorliegenden Erfindung wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiel geeigneter Bindungen sind Kohlenstoff-Wasserstoff-Einzelbindungen oder Kohlenstoff-Kohlenstoff-, Kohlenstoff-Sauerstoff ; Kohlenstöff-Stickstoff-, Kohlenstoff-Phosphor -oder Kohlenstoff-Silizium-Einzelbindungen oder -Doppelbindungen.

Es können in den erfindungsgemäßen Dual-Cure-Lacken indes auch Gemische aus rein thermisch härtbaren und rein mit aktinischer Strahlung härtbaren Bindemitteln angewandt werden.

Der Gehalt der erfindungsgemäßen Lacke an den vorstehend beschriebenen Bindemitteln kann breit variieren und richtet sich nach den Erfordernissen des Einzelfalls, insbesondere nach der Funktionalität der gegebenenfalls mitverwendeten Vernetzungsmittel. Erfindugnsgemäß werden die Bindemittel in einer Menge angewandt, dass das erfindungswesentliche Pigment/Bindemittel-Verhältnis resultiert.

Beispiele geeigneter Vernetzungsmittel sind Aminoplastharze, wie sie beispielsweise in Römpp Lexikon Lacke und Druckfarben, Georg Thieme Verlag, 1998, Seite 29, »Aminoharze«, dem Lehrbuch "Lackadditive"-von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A1 oder EP-B-0 245 700 A 1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden, Carboxylgruppen enthaltende Verbindungen oder Harze, wie sie beispielsweise in der Patentschrift DE 196 52 813 A1 beschrieben werden, Epoxidgruppen enthaltende Verbindungen oder Harze, wie sie beispielsweise in den Patentschriften EP 0 299-420A1, DE 22 14 650B1, DE 27 49 576 B1, US 4,091,048 A1 oder US 3,781,379 A1 beschrieben werden, unblockierte und blockierte Polyisocyanate, wie sie beispielsweise in den Patentschriften US 4,444,954 A1, DE 196 17 086A1, DE 196 31 269A1, EP 0 004 571A1 oder EP 0 582 051 A1 beschrieben werden, und/oder Tris(alkoxycarbonylamino)triazine, wie sie in den Patentschriften US 4,939,213 A1, US 5,084,541 A1, US 5,288,865 A1 oder EP 0 604 922 A1 beschrieben werden.

Besonders bevorzugt werden blockierte Polyisocyanate eingesetzt. Insbesondere werden die mit den aus der deutschen Patentanmeldung DE 199 14 896 A1, Spalte 12, Zeile 13, bis Spalte 13, Zeile 2, bekannten Blockierungsmitteln, speziell mit Caprolactam, blockierten Polyisocyanate verwendet.

Der Gehalt der erfindungsgemäßen Lacke an den Vernetzungsmittel kann breit variieren und richtet sich nach den Erfordernissen des Einzelfalls, insbesondere nach der Funktionalität der mitverwendet Bindemittel;

Besonders bevorzugt werden Einkomponentensysteme aus hydroxylgruppenhaltigen Polyestern und mit Caprolactam blockierten Polyisocyanaten verwendet. Diese Einkomponentensysteme sind handelsübliche Produkte und werden beispielsweise unter der Marke Vesticoat ® EPUB 877 vertrieben.

Vorzugsweise liegt der Gehalt der erfindungsgemäßen Lacke an Vernetzungsmitteln und Bindemitteln bei 10 bis 60, bevorzugt 12 bis 55, besonders bevorzugt 15 bis 50 und insbesondere 15 bis 45 Gew.%, jeweils bezogen auf den Festkörper des jeweiligen erfindungsgemäßen Lacks.

Der erfindungsgemäße Lack kann ein organisches Lösemittel enthalten. Beispiele üblicher und bekannter Lösemittel werden in D. Stoye und W. Freitag, (Hrsg.), »Paints, Coatings and Solvents, 2nd Completely Revised Editon, Wiley-VCH, Weinheim New York, 1998, »14.9. Solvent Groups«, Seiten 327 bis 373 beschrieben. In dem erfindungsgemäßen Lack werden sie vorzugsweise in einer Menge von 5 bis 50, insbesondere 5 bis 40 Gew.%, bezogen auf den erfindungsgemäßen Lack, eingesetzt.

Nicht zuletzt enthält der erfindungsgemäße Beschichtungsstoff mindestens einen lacktypischen Zusatzstoff, der aus der Gruppe der anorganischen und organischen Zusatzstoffe ausgewählt wird.

Beispiele geeigneter lacktypischer Zusatzstoffe sind farb- und/oder effektgebende Pigmente und korrosionshemmende Pigmente, Füllstoffe, Nanopartikel, Reaktivverdünner für die thermische Härtung oder die Härtung mit aktinischer Strahlung, Rheologiehilfsmittel, UV-Absorber, Lichtschutzmittel, Radikalfänger, Initiatoren für die radikalische Polymerisation, Katalysatoren für die thermische Vernetzung, Photoinitiatoren und -coinitiatoren, Slipadditive, Polymerisationsinhibitoren, Entschäumer, Emulgatoren, Entgasungsmittel, Netz- und Dipergiermittel, Haftvermittler, Verlaufmittel, filmbildende Hilfsmittel, rheologiesteuernde Additive (Verdicker), Flammschutzmittel; Sikkative, Trockungsmittel, Hautverhinderungsmittel, sonstige Korrosionsinhibitoren, Wachse und Mattierungsmittel, wie sie aus dem Lehrbuch »Lackadditive« von Johan Bieleman, Wiley-VCH, Weinheim, New York, 1998, oder der deutschen Patentanmeldung DE 199 14 896 A1, Spalte 13, Zeile 56, bis Spalte 15, Zeile 54, bekannt sind.

Beispiele besonders gut geeigneter Zusatzstoffe sind Silylamine, wie Bis(trimethylsilyl)amin, das unter der Marke Aerosil ® R 812 S vertrieben wird, Epichlorhydrine, wie Bisphenol-A-Epichlorhydrin, das unter der Marke Epikote ® 834 vertrieben wird, ein selbstvernetzendes Urethanharz, das unter der Marke Desmodur ® VPLS 2253 vertrieben wird, und Dibutylzinndilaurat.

Beispiele ganz besonders gut geeigneter Zusatzstoffe sind korrosionshemmende Pigmente (Pigmente (A 2)).

Es können die üblichen und bekannten korrosionshemmenden Pigmente (A 2) verwendet werden. Vorzugsweise ziehen aus der Gruppe, bestehend aus Zinkphosphat, Zinkmetaborat und Bariummetaborat-Monohydrat, insbesondere Zinkphosphat und Bariummetaborat-Monohydrat, ausgewählt.

Zinkphosphat ist eine handelsübliche Verbindung wird beispielsweise unter der Marke Sicor ® ZNP/S vertrieben. Dgl. ist Bariummetaborat-Monohydrat eine handelsübliche Verbindung und wird beispielsweise unter der Marke Butrol ® 11M2 vertrieben.

Anstelle der Pigmente (A 2) oder zusätzlich zu diesen kann amorphes Siliziumdioxid, das mit Metallionen, vorzugsweise ausgewählt aus der Gruppe, bestehend aus Alkalimetallionen, Erdalkalimetallionen, insbesondere Calciumionen, Scandium-, Yttrium- und Lanthanionen, Lanthanidionen sowie Zink- und Aluminiumionen modifiziert ist, eingesetzt werden (Pigmente (A 3)). Bevorzugt werden Calciumionen angewandt.

Mit Calciumionen modifiziertes amorphes Siliziumdioxid (A 3) ist auch ein handelsübliches Produkt und wird beispielsweise unter der Marke Shieldex ® vertrieben.

Es ist von besonderem Vorteil, wenn zusammen mit den Pigmenten (A 2) und (A 3) noch mindestens eine Verbindung (A 4) der allgemeinen Formel I eingesetzt wird:

Mₙ(X)ₘ (I),

die Variablen und der Index die folgende Bedeutung haben:
- M: mindestens ein Zentralatom, ausgewählt aus der Gruppe der Lewis-Akzeptoren,
- X: Lewis-Donoren-Liganden mit mindestens einem Brückenatom, ausgewählt aus den Elementen der 5. und 6. Hauptgruppe des Periodischen Systems der Elemente,
- n: 1 bis 500 und
- m: 3 bis 2.000.

Die Verbindungen I können monomer (einkemig) oder dimer, oligomer oder polymer(mehrkernig) sein.

In der allgemeinen Formel I steht die Variable M für mindestens ein Zentralatom, das aus der Gruppe der Lewis-Akzeptoren ausgewählt wird. Vorzugsweise wird es aus der Gruppe, bestehend aus Aluminium, Titan und Zirkonium, ausgewählt. Bevorzugt ist M = Titan.

In der allgemeinen Formel I steht die Variablen X für Lewis-Donoren-Liganden mit mindestens einem Brückenatom, ausgewählt aus den Elementen der 5. und 6. Hauptgruppe des Periodischen Systems der Elemente. Vorzugsweise wird das Brückenatom aus der Gruppe, bestehend aus Stickstoff-, Phosphor-, Sauerstoff- und Schwefelatomen, insbesondere Phosphor- und Sauerstoffatomen, ausgewählt.

Lewis-Akzeptoren und Lewis-Donoren oder -Donatoren sind Lewis-Säuren und -Basen i. S. d. Säure-Base-Begriffs von Lewis.

In der allgemeinen Formel I steht der Index n für eine Zahl, insbesondere eine ganze Zahl, von 1 bis 500, vorzugsweise 1 bis 100, Bevorzugt 1 bis 50, besonders bevorzugt 1 bis 20 und insbesondere 1 bis 20. Der Index m steht für eine Zahl, insbesondere eine ganze Zahl von 3 bis 2.000,vorzugsweise 3 bis 1.000, bevorzugt 3 bis 500, besonders bevorzugt 3 bis 100 und insbesondere 3 bis 50.

Beispiele gut geeigneter Verbindungen I sind monomere, dimere, oligomere oder polymere Alkoxide von Aluminium oder Titan, wie
- Al₃ (O-tert.-buytyl)₆,
- Al₄(O-isopropyl)₁₂, oder
- Ti(O-ethyl)₄.

Beispiele besonders gut geeigneter Verbindungen der allgemeinen Formel I sind Verbindungen der allgemeinen Formel II:

RO-M[-O-P(O)(OH)-O-P(O)(OR¹)₂]₃. HP(O)(OR²)₂ (II),

worin die Variablen R, R¹ und R² unabhängig voneinander für aliphatische und cycloaliphatische Reste stehen und M die vorstehend angegebene Bedeutung hat und insbesondere aus der Gruppe, bestehend aus Aluminium, Titan und Zirkonium, ausgewählt wird. Besonders bevorzugt ist M= Titan. =

In der allgemeinen Formel II stehen die Variablen R, R¹ und R² unabhängig voneinander für aliphatische und cycloaliphatische, insbesondere aliphatische, Reste. Vorzugsweise enthalten die aliphatische Reste 3 bis 20 Kohlenstoffatome. Beispiele geeigneter aliphatischer Reste sind Propyl, Isopropyl, Butyl, sec.-Butyl, Isobutyl, tert.-Butyl, n-Pentyl, Isoamyl, n-Hexyl, n-Heptyl, Octyl, Isoctyl, Nonyl, Decyl, Undecyl, Dodecyl, Tridecyl, Tetradecyl, Pentadecyl, Hexadecyl, Heptadecyl, Octadecyl, Nonadecyl und Eicosanyl, bevorzugt Isopropyl, Octyl und Isooctyl. Besonders bevorzugt ist R Isopropyl, R¹ Octyl und R² Isooctyl.

Ganz besonders vorteilhaft ist somit das Addukt von Isopropyl-tris (dioctylpyrophosphato)-titanat mit einem Mol Düsooctylphosphit als Bestandteil (A 4) eingesetzt. Das Addukt ist eine handelsüblich Verbindung und wird beispielsweise unter der Marke KEN-REACT ® von der Firma Kenrich Petrochemicals vertrieben.

Sofern verwendet, enthalten die erfindungsgemäßen Lacke den Bestandteil (A 2) vorzugsweise in einer Menge von 0,1 bis 10, bevorzugt 0,3 bis 8, besonders bevorzugt 0,5 bis 7, ganz besonders bevorzugt 1 bis 5 und insbesondere 1,5 bis 4 Gew.%, jeweils bezogen auf den Festkörper des jeweiligen erfindungsgemäßen Lacks.

Der Bestandteil (A 3) ist, sofern verwendet, in den erfindungsgemäßen Lacken vorzugsweise in einer Menge von 0,1 bis 10, bevorzugt 0,3 bis 8, besonders bevorzugt 0,5 bis 7, ganz besonders bevorzugt 1 bis 5 und insbesondere 1,5 bis 4 Gew.%, jeweils bezogen auf den Festkörper des jeweiligen erfindungsgemäßen Lacks, enthalten.

Sofern verwendet, enthalten die erfindungsgemäßen Lacke den Bestandteil (A 4) vorzugsweise in einer Menge von 0,01 bis 5, bevorzugt 0,03 bis 4, besonders bevorzugt 0,05 bis 3, ganz besonders bevorzugt 0,1 bis 2,5 und insbesondere 0,2 bis 2 Gew.%, jeweils bezogen auf den Festkörper des jeweiligen erfindungsgemäßen Lacks.

Es ist besonders vorteilhaft, alle drei Bestandteile (A 2), (A 3) und (A 4) gemeinsam zu verwenden. In diesem Fall kann das Gewichtsverhältnis der Bestandteile (A 2), (A 3) und (A 4) breit variieren. Vorzugsweise varriert es im Rahmen der vorstehend angegebenen Gehalte. Insbesondere liegen aber die Bestandteile (A 2), (A 3) und (A 4) in einem Gewichtsverhältnis von 1 : (0,5 bis 1,5, insbesondere 0,8 bis 1,2) : (0,1 bis 2, insbesondere 0,2 bis 0,6) vor. Dabei kann das Gewichtsverhältnis auch 1 : (0,5 bis 1,5) : (0,2 bis 0,6) oder 1 : (0,8 bis 1,2) : 0,1 bis 2) betragen. Besonders bevorzugt ist das Gewichtsverhältnis 1 : (0,8 bis 1,2) : (0,2 bis 0,6).

Das Gewichtsverhältnis von Bestandteil (A 1) einerseits zu den Bestandteilen (A 2), (A 3) und (A 4) andererseits kann breit variieren. Es ist indes von Vorteil, wenn das Gewichtsverhältnis von Bestandteil (A 1) einerseits zu den Bestandteilen (A 2), (A 3) und (A 4) andererseits bei 20 : 1 bis 5 : 1, bevorzugt 15 : 1 bis 5 : 1, besonders bevorzugt 12 : 1 bis 5 : 1, ganz besonders bevorzugt 10 : 1 bis 7 : 1 und insbesondere 9 : 1 bis 7 : 1 liegt.

Die Herstellung der erfindungsgemäßen Lacke weist keine methodischen Besonderheiten auf, sondern erfolgt durch das Vermischen der vorstehend beschriebenen Bestandteile. Dabei können Mischaggregate, wie Rührkessel, Dissolver, In-line-Dissolver, Perlmühlen, Rührwerksmühlen, statische Mischer, Zahnkranz-Dispergatoren oder Extruder, verwendet werden. Gegebenenfalls wird unter Ausschluß von aktinischer Strahlung gearbeitet, um eine Schädigung des erfindungsgemäßen Lacks, der allein oder zusätzlich mit aktinischer Strahlung härtbar ist, zu vermeiden. Bei der Herstellung können die einzelnen Bestandteile der erfindungsgemäßen Mischung separat eingearbeitet werden. Die erfindungsgemäße Mischung kann aber auch separat hergestellt und mit den übrigen Bestandteilen vermischt werden.

Vorzugsweise werden die einzelnen Bestandteile der erfindungsgemäßen Mischung separat eingearbeitet.

Die erfindungsgemäßen Lacke sind hervorragend für die Bandbeschichtung geeignet. Das Bandbeschichtung geht aus von einem Metallband, das in üblicher und bekannter Weise gereinigt, entfettet, passiviert, chemisch behandelt, gespült und getrocknet wurde. Das Metallband kann einseitig oder doppelseitig beschichtet werden.

Geeignet sind alle Metalle, aus denen sich Bänder formen lassen, die den mechanischen, chemischen und thermischen Beanspruchungen der Bandbeschichtung gewachsen sind. Gut geeignet sind Metallbänder auf der Basis von Aluminium oder Eisen. Im Falle von Eisen sind kaltgewalzte Stähle, elektrolytisch verzinkte Stähle, feuerverzinkte Stähle oder Edelstähle besonders gut geeignet. Vorzugsweise sind die Bänder 200 µm bis 2 mm dick.

Für die Bandbeschichtung durchläuft das Metallband eine Bandbeschichtungsanlage, wie sie z.B. in Römpp Lexikon Lacke und Druckfarben, Georg Thieme Verlag, Stuttgart, New York, 1998, Seite 55, "Bandbeschichtung", oder in der deutschen Patentanmeldung DE 196 32 426 A1 beschrieben wird, mit einer Geschwindigkeit, die den Appliktions-und Härtungseigenschaften der angewandten erfindungsgemäßen Lacke angepaßt ist. Die Geschwindigkeit kann daher von Beschichtungsprozeß zu Beschichtungsprozeß sehr breit variieren. Vorzugsweise liegt sie bei 10 bis 150, bevorzugt 12 bis 120, besonders bevorzugt 14 bis 100, ganz besonders bevorzugt 16 bis 80 und insbesondere 20 bis 70 m/min.

Die Applikation der erfindungsgemäßen Lacke kann in beliebiger Weise, z. B. durch Spritzen, Gießen oder Walzlackieren, erfolgen. Von diesen Applikationsverfahren ist das Walzlackieren besonders vorteilhaft und wird daher erfindungsgemäß bevorzugt verwendet.

Jeder Applikationsschritt des Walzlackierens kann mit mehreren Walzen durchgeführt werden. Vorzugsweise werden zwei bis vier und insbesondere zwei Walzen angewandt.

Beim Walzlackieren taucht die sich drehende Aufnahmewalze (Pick-up-Walze) in einen Vorrat des erfindungsgemäßen Lacks ein und übernimmt so den zu applizierenden Lack. Dieser wird von der Aufnahmewalze direkt oder über mindestens eine Übertragungswalze auf die sich drehende Applikationswalze übertragen. Von dieser aus wird der Lack durch gleichgerichtetes oder gegenläufiges Abstreifen auf das Band übertragen.

Der erfindungsgemäße Lack kann aber auch direkt in einen Spalt zwischen zwei Walzen gepumpt werden, was von der Fachwelt auch als NIP-Feed bezeichnet wird.

Erfindungsgemäß ist das gegenläufige Abstreifen oder das Reverse-Roller-Coating-Verfahren von Vorteil und wird deshalb bevorzugt angewandt.

Beim dem Walzlackieren können die Umlaufgeschwindigkeiten der Aufnahmewalze und der Applikationswalze von Beschichtungsprozeß zu Beschichtungsprozeß sehr stark variieren. Vorzugsweise hat die Applikationswalze eine Umlaufgeschwindigkeit, die 110 bis 125% der Bandgeschwindigkeit beträgt, und die Aufnahmewalze eine Umlaufgeschwindigkeit, die 20 bis 40% der Bandgeschwindigkeit beträgt.

Vorzugsweise werden die erfindungsgemäßen Lacke in einer Naßschichtdicke appliziert, daß nach der Aushärtung der Lackschichten schweißbare, insbesondere punktschweißbare, Beschichtungen einer Trockenschichtdicke von 4 bis 12, bevorzugt 5 bis 10, besonders bevorzugt 5 bis 9,5 und insbesondere 6 bis 9 µm resultieren.

Die vorstehend beschriebenen Applikationsmethoden können bei den Lacken angewandt werden, mit denen die erfindungsgemäßen Beschichtungen überlackiert werden, es sei denn es handelt sich um Pulverlacke oder um Elektrolauchlackierungen, bei denen die üblichen und bekannten speziellen Applikationsmethoden eingesetzt werden, wie das elektrostatische Pulversprühen bei langsam laufenden Bändern oder das sogenannte "Powder-Cloud-Chamber"-Verfahren bei schnell laufenden Bändern und die kathodische Elektrotauchlackierung.

Die Aufheizung der erfindungsgemäßen Lackschichten bei der thermischen Härtung erfolgt vorzugsweise durch Konvektionswärmeübertragung, Bestrahlen mit nahem oder fernem Infrarot und/oder bei Bändern auf der Basis von Eisen durch elektrische Induktion erfolgen. Die maximale Objekttemperatur liegt vorzugsweise bei maximal 270 und insbesondere bei maximal 260 °C.

Die Aufheizzeit, d.h. die Zeitdauer der thermischen Härtung variiert in Abhängigkeit von dem eingesetzten erfindungsgemäßen Lack. Vorzugsweise liegt sie bei 10 s bis 2 min.

Wird im wesentlichen die Konvektionswärmeübertragung angewandt, werden bei den bevorzugten Bandlaufgeschwindigkeiten Umluftöfen einer Länge von 30 bis 50, insbesondere 35 bis 45 m, benötigt. Vorzugsweise liegt die Umlufttemperatur bei 350 °C.

Die thermische Härtung der erfindungsgemäßen Lackschichten kann noch durch die Bestrahlung mit aktinischer Strahlung unterstützt werden.

Die Härtung kann indes auch mit aktinischer Strahlung alleine erfolgen, wie dies beispielsweise in der deutschen Patentanmeldung DE 198 35 206A1 beschrieben wird.

Die vorstehend beschriebenen Härtungsmethoden können selbstverständlich auch bei den Lackschichten angewandt werden, mit denen die erfindungsgemäßen Korrosionsschutzbeschichtungen überlackiert werden.

Werden bei der Bandbeschichtung mehrere Lacke appliziert, wird dies in einer entsprechend ausgelegten Anlage durchgeführt, bei der mehrere Applikations- sowie ggf. Härtungsstationen hintereinander geschaltet sind. Oder aber nach der Applikation und der Härtung des ersten, d. h. des erfindungsgemäßen, Lacks wird das beschichtete Band wieder gewickelt, wonach das beschichtete Coil in einer zweiten, dritten etc. Bandbeschichtungsanlage einseitig oder beidseitig mit zweiten, dritten etc. Lackierungen versehen wird.

Nach der Herstellung der beschichteten Bänder können die zu beschichteten Coils gewickelt und dann an einem anderen Ort weiter verarbeitet werden; sie können aber auch, direkt von der Bandbeschichtung kommend, weiterverarbeitet werden. So können sie mit Kunststoffen laminiert oder mit abziehbaren Schutzfolien versehen werden. Sie können nach ihrer Zerkleinerung in Teile geeigneter Größe formgebend bearbeitet werden. Beispiele geeigneter formgebender Bearbeitungsmethoden sind Pressen und Tiefziehen.

Die resultierenden erfindungsgemäßen Coils, Profilelemente und Formteile sind kratzfest, korrosionsstabil, witterungsstabil und chemikalienstabil und können problemlos mit den unterschiedlichsten

Lacken überlackiert werden. Überraschend ist, dass keine Vorbehandlung der Metallbänder mit Chromat notwendig ist, um einem vorzüglichen Korrosionsschutz zu erzielen.

Vor allem aber sind die erfindungsgemäßen Coils, Profilelemente und Formteile hervorragend schweißbar, insbesondere punktschweißbar. Dabei bewirken die erfindungsgemäßen Beschichtungen, bessere Schweißpunkte mit einem glatteren, ästhetisch noch immer ansprechenden Umkreis. Außerdem sind die Schweißverbindungen besonders fest. Die erfindungsgemäßen Beschichtungen weisen außerdem einen vergleichsweise breiten Schweißbereich und einen vergleichsweise niedrigen Durchgangswiderstand auf und bewirken, was die Schweißelektroden betrifft, eine besonders hohe Standmenge, d. h., die Anzahl der Schweißpunkte, die mit einer Elektrode gesetzt werden kann, ist besonders hoch.

Die mit den erfindungsgemäßen Beschichtungen beschichteten Coils sind daher hervorragend für Anwendungen im Automobilbau beispielsweise für die Herstellung von Karosserieteilen und Karosserien, Nutzfahrzeugaufbauten und Verkleidungen von Caravans, im Hausgerätebereich beispielsweise für die Herstellung von Waschmaschinen, Geschirrspülmaschinen, Trocknern, Kühlschränken, Gefrierschränken oder Herden, im Leuchtenbereich für die Herstellung von Leuchten für den Innen- und Außenbereich oder im Baubereich im Innen- und Außenbereich, beispielsweise für die Herstellung von Decken-und Wandelementen, Türen, Toren, Rohrisolierungen, Rollläden oder Fensterprofilen geeignet.

### Beispiele

### Beispiel 1

### Die Herstellung eines erfindungsgemäßen Coil-Coating-Lacks

In einem geeigneten Rührgefäß wurden in der angegebenen Reihenfolge 26,9 Gewichtsteile eines Einkomponentensystems auf Basis eines gesättigte, hydroxylruppenhaltigen Polyesters und eines mit Caprolactam blockierten Polyisocyanats (Vesticoat ® EPUB 877 der Firma Hüls AG), 0,6 Gewichtsteile Bis(trimethylsilyl)amin (Aerosil ® R 812 S der Firma Degussa), 2,47 Gewichtsteile mit Calciumionen modifiziertes Siliziumdioxid (Shieldex ® der Firma Grace Division), 2,73 Gewichtsteile Zinkphosphat (Sicor ® ZNP/S der Firma Waardals Kjemiske Fabriken), 0,99 Gewichtsteile des Addukt von Isopropyl-tris(dioctylpyrophosphato)-titanat mit einem Mol Diisooctylphosphit (KEN-REACT ® KR38S der Firma Kenrich Petrochemicals) und 4,5 Gewichtsteile Solvesso ® 150 (ExxonMobil Chemicals) vermischt und mit einem Dissolver während zehn Minuten vordispergiert. Die resultierende Mischung wurde in einer Perlmühle mit Kühlmantel überführt und mit 2 mm-SAZ-Glasperlen vermischt. Das Mahlgut wurde während 12 Minuten auf eine Kornfeinheit nach Hegmann von 10 bis 15 µm gemahlen. Anschließend wurde das Mahlgut von den Glasperlen abgetrennt.

Das Mahlgut wurde unter Rühren in der angegebenen Reihenfolge mit 3,55 Gewichtsteilen Bisphenol-A-Epichlorhydrin (Epikote ® 834 der Firma Shell Resins), 1,78 Gewichtsteilen eines handelsüblichen selbstvernetzenden Urethanharzes (Desmodur ® VPLS 2253 der Firma Bayer AG), 0,1 Gewichtsteilen Dibutylzinndilaurat und 4,26 Gewichtsteilen Solvesso ® 150 versetzt.

Unter langsamen Dissolvern wurde der resultierenden Mischung 26,3 Gewichtsteile feinteiliges Eisenphosphid (Ferrophos ® HRS 2132; mittlere Teilchengröße: 3 bis 16 µm) und 26,3 Gewichtsteile grobteiliges Eisenphosphid (Ferrophos ® HRS 2131; mittlere Teilchengröße: 5 bis 22 µm) hinzugefügt (Gewichtsverhältnis 1 : 1). Nach weiteren zehn Minuten war die gewünschte Verteilung der elektrisch leitfähigen Pigmente erreicht.

Der erfindungsgemäße Coil-Coating-Lack wies ein Pigment/Bindemittel-Gewichtsverhältnis von 3 : 1 auf und war hervorragend für das Bandbeschichtungsverfahren geeignet.

### Beispiel 2

### Die Herstellung einer erfindungsgemäßen Beschichtung

Für das Beispiel 2 wurde der erfindungsgemäße Coil-Coating-Lack des Beispiels 1 verwendet. Er wurde mit Hilfe von Stabrakeln auf Stahlplatten der Sorten Z und ZE mit chromatfreier Vorbehandlung in einer Naßschichtdicke appliziert, das nach der Härtung in einem Durchlauftrockner bei einer Umlufttemperatur von 350 °C und einer Objekttemperatur von 220 °C Beschichtungen einer Trockenschichtdicke von 8 µm resultierten.

Um zu bestimmen, wie gut sich die Stahlplatten des Beispiels 2 wurden jeweils zwei Stahlplatten gemäß einer in der Fachwelt bekannten Norm von DaimlerChrysler miteinander punktverschweißt. Dabei wurde der Schweißbereich (kA), der Durchgangswiderstand (Ohm) und die Standmengen der Elektroden, d. h., die Anzahl der Schweißpunkte, die mit einer Elektrode gesetzt werden konnten, gemessen. Außerdem wurden Qualitätsmerkmale, wie Güte der Schweißpunkte und Glätte und ästhetische Wirkung des Umkreises der Schweißpunkte, visuell bestimmt und jeweils wie folgt benotet:

### Note Bedeutung

- 1: sehr gut
- 2: gut
- 3: befriedigend, noch-brauchbar
- 4: schlecht, unbrauchbar.

Des weiteren wurde die Festigkeit der Schweißverbindungen manuell qualitativ bestimmt und wie folgt benotet:

### Note Bedeutung

- 1: sehr fest, per Hand praktisch nicht mehr zu lösen
- 2: fest, per Hand nur mit Schwierigkeiten zu lösen
- 3: per Hand leicht zu lockern.

Die Ergebnisse finden sich in der Tabelle. Sie belegen, dass die erfindungsgemäßen Stahlplatten des Beispiels 2 sich sehr gut in Automobilqualität punktschweißen ließen.

**Tabelle: Die Punktverschweißbarkeit der erfindungsgemäßen Stahlplatten (Beispiel 2)**

| **Eigenschaften** | **Beispiel 2** |
|---|---|
| Schweißbereich (kA) | 1,9 |
| Durchgangswiderstand (Ohm) | 0,0187 |
| Standmenge (Anzahl der Punkte) | 1.000 |
| Güte der Schweißpunkte | 1 |
| Umkreis | 1 |
| Festigkeit | 1 |

## Patentansprüche

1. Coil-Coating-Lacke enthaltend mindestens ein elektrisch leitfähiges Pigment (A 1) mit mindestens bimodaler Teilchengrößenverteilung und mindestens ein Bindemittel, wobei das Pigment/Bindemittel-Gewichtsverhältnis > 1,5: 1 ist.

2. Coil-Coating-Lacke nach Anspruch 1, **dadurch gekennzeichnet, dass** 90 Gew.-% des feinteiligeren Anteils des elektrisch leitfähigen Pigments (A 1) eine mittlere Teilchengröße von 1 bis 20 µm und 90 Gew.-% des grobteiligeren Anteils des elektrisch leitfähigen Pigments (A 1) eine mittlere Teilchengröße von 3 bis 30 µm hat.

3. Coil-Coating-Lacke nach Anspruch 1 oder 2, **dadurch gekennzeichnet, dass** das Gewichtsverhältnis von feinteiligerem Anteil zu grobteiligerem Anteil bei 2 : 1 bis 1 : 2 liegt.

4. Coil-Coating-Lacke nach einem der Ansprüche 1 bis 3, **dadurch gekennzeichnet, dass** sie das elektrisch leitfähige Pigment (A 1) in einer Menge von 10 bis 80 Gew.%, bezogen auf den Festkörper des Coil-Coating-Lacks, enthalten.

5. Coil-Coating-Lacke nach einem der Ansprüche 1 bis 4, **dadurch gekennzeichnet, dass** das elektrisch leitfähige Pigment (A 1) aus der Gruppe, bestehend aus elementarem Silizium und metallischen, wasserunlöslichen Phosphiden, ausgewählt wird.

6. Coil-Coating-Lacke nach einem der Ansprüche 1 bis 5, **dadurch gekennzeichnet, dass** sie mindestens ein korrosionshemmendes Pigment (A 2) enthalten.

7. Coil-Coating-Lacke nach Anspruch 6, **dadurch gekennzeichnet, dass** die korrosionshemmenden Pigmente (A 2) aus der Gruppe, bestehend aus Zinkphosphat, Zinkmetaborat und Bariummetaborat-Monohydrat, ausgewählt werden.

8. Coil-Coating-Lacke nach einem der Ansprüche 1 bis 7, **dadurch gekennzeichnet, dass** sie mindestens ein amorphes Siliziumdioxid (A 3), das mit Metallionen modifiziert ist, enthalten.

9. Coil-Coating-Lacke nach Anspruch 8, **dadurch gekennzeichnet, dass** die Metallionen in der Verbindung (A 3) aus der Gruppe, bestehend aus Alkalimetallionen, Erdalkalimetallionen, Scandium-, Yttrium-, und Lanthanionen, Lanthanidionen sowie Zink- und Aluminiumionen, ausgewählt werden.

10. Coil-Coating-Lacke nach einem der Ansprüche 1 bis 9, **dadurch gekennzeichnet, dass** sie mindestens eine Verbindung (A 4) der allgemeinen Formel I:
Mₙ(X)ₘ (I),
worin die Variablen und der Index die folgende Bedeutung haben:
M mindestens ein Zentralatom, ausgewählt aus der Gruppe der Lewis- Akzeptoren,
X Lewis-Donoren-Liganden mit mindestens einem Brückenatom, ausgewählt aus den Elementen der 5. und 6. Hauptgruppe des Periodischen Systems der Elemente,
n 1 bis 500 und
m 3 bis 2.000
enthalten.

11. Coil-Coating-Lacke nach Anspruch 10, **dadurch gekennzeichnet, dass** das Zentralatom M aus der Gruppe, bestehend aus Aluminium, Titan und Zirkonium, ausgewählt wird.

12. Coil-Coating-Lacke nach Anspruch 10 oder 11, **dadurch gekennzeichnet, dass** das Brückenatom in der Verbindung (A 4) aus der Gruppe, bestehend aus Stickstoff-, Phosphor-, Sauerstoff- und Schwefelatome, ausgewählt wird.

13. Coil-Coating-Lacke nach einem der Ansprüche 10 bis 12, **dadurch gekennzeichnet, dass** die Verbindung (A 4) aus der Gruppe, bestehend aus Verbindungen (A 4) der allgemeinen Formel II:
RO-M[-O-P(O)(OH)-O-P(O)(OR¹)₂]_{3 ·} HP(O)(OR²)₂ (II),
worin die Variablen R, R¹ und R² unabhängig voneinander für aliphatische und cycloaliphatische Reste stehen und M = Titan, Zirkonium und Aluminium, ausgewählt wird.

14. Coil-Coating-Lacke nach einem der Ansprüche 6 bis 13, **dadurch gekennzeichnet, dass** die Bestandteile (A 2), (A 3) und (A 4) in einem Gewichtsverhältnis von 1 : (0,5 bis 1,5) : (0,1 bis 2) vorliegen.

15. Coil-Coating-Lacke nach Anspruch 14, **dadurch gekennzeichnet, dass** das Gewichtsverhältnis von Bestandteil (A 1) einerseits zu den Bestandteilen (A2), (A 3) und (A 4) andererseits bei 20 : 1 bis 5 : 1 liegt.

16. Coil-Coating-Lacke nach einem der Ansprüche 6 bis 15, **dadurch gekennzeichnet, dass** sie den Bestandteil (A 2) in einer Menge von 0,1 bis 10 Gew.%, bezogen auf den Festkörper des Coil-Coating-Lackes, enthalten.

17. Coil-Coating-Lacke nach einem der Ansprüche 8 bis 16, **dadurch gekennzeichnet, dass** sie den Bestandteil (A 3) in einer Menge von 0,1 bis 10 Gew.%, bezogen auf den Festkörper des Coil-Coating-Lacks, enthalten.

18. Coil-Coating-Lacke nach einem der Ansprüche 10 bis 17, **dadurch gekennzeichnet, dass** sie den Bestandteil (A 4) in einer Menge von 0,01 bis 5 Gew.-%, bezogen auf den Festkörper des Coil-Coating-Lacks, enthalten.

19. Coil-Coating-Lacke nach einem der Ansprüche 1 bis 18, **dadurch gekennzeichnet, dass** sie Einkomponentensysteme sind.

20. Coil-Coating-Lacke nach einem der Ansprüche 1 bis 19, **dadurch gekennzeichnet, dass** sie thermisch, mit aktinischer Strahlung oder thermisch und mit aktinischer Strahlung härtbar sind.

21. Coil-Coating-Lacke nach einem der Ansprüche 1 bis 20, **dadurch gekennzeichnet, dass** sie konventionelle oder wässrige Coil-Coating-Lacke, im wesentlichen oder völlig lösemittel- und wasserfreie, flüssige Coil-Coating-Lacke (100%-Systeme), im wesentlichen oder völlig lösemittel- und wasserfreie, feste pulverförmige Coil-Coating-Lacke (Pulverlacke) oder wässrige Dispersion von Pulverlacken (Pulverslurries) sind.

22. Coil-Coating-Lacke nach Anspruch 21, **dadurch gekennzeichnet, dass** sie konventionelle Coil-Coating-Lacke sind.

## Claims

1. Coil coating materials comprising at least one electrically conductive pigment (A 1) having an at least bimodal particle size distribution and at least one binder, the pigment/binder weight ratio being >1.5:1.

2. Coil coating materials according to Claim 1, **characterized in that** 90% by weight of the finer fraction of the electrically conductive pigment (A 1) has an average particle size of from 1 to 20 µm and 90% by weight of the coarser fraction of the electrically conductive pigment (A 1) has an average particle size of from 3 to 30 µm.

3. Coil coating materials according to Claim 1 or 2, **characterized in that** the weight ratio of finer fraction to coarser fraction is from 2:1 to 1:2.

4. Coil coating materials according to any of Claims 1 to 3, **characterized in that** they comprise said electrically conductive pigment (A 1) in an amount of from 10 to 80% by weight, based on the solids of the coil coating material.

5. Coil coating materials according to any of Claims 1 to 4, **characterized in that** said electrically conductive pigment (A1) is selected from the group consisting of elemental silicon and metallic, water-insoluble phosphides.

6. Coil coating materials according to any of Claims 1 to 5, **characterized in that** they comprise at least one corrosion-inhibiting pigment (A 2).

7. Coil coating materials according to Claim 6, **characterized in that** said corrosion-inhibiting pigments (A 2) are selected from the group consisting of zinc phosphate, zinc metaborate, and barium metaborate monohydrate.

8. Coil coating materials according to any of Claims 1 to 7, **characterized in that** they comprise at least one amorphous silica (A 3) modified with metal ions.

9. Coil coating materials according to Claim 8, **characterized in that** the metal ions in the compound (A 3) are selected from the group consisting of alkali metal ions, alkaline earth metal ions, scandium ions, yttrium ions, and lanthanum ions, lanthanide ions, and zinc ions and aluminium ions.

10. Coil coating materials according to any of Claims 1 to 9, **characterized in that** they comprise at least one compound (A 4) of the general formula I:
Mₙ(X)ₘ (I)
in which the variables and indices have the following meanings:
M is at least one central atom selected from the group of Lewis acceptors,
X stands for Lewis donor ligands having at least one bridging atom selected from elements of main groups 5 and 6 of the periodic table of the elements,
n is from 1 to 500, and
m is from 3 to 2000.

11. Coil coating materials according to Claim 10, **characterized in that** the central atom M is selected from the group consisting of aluminium, titanium, and zirconium.

12. Coil coating materials according to Claim 10 or 11, **characterized in that** the bridging atom in the compound (A 4) is selected from the group consisting of nitrogen, phosphorus, oxygen, and sulphur atoms.

13. Coil coating materials according to any of Claims 10 to 12, **characterized in that** the compound (A 4) is selected from the group consisting of compounds (A 4) of the general formula II:
RO-M[-O-P(O)(OH) -O-P(O) (OR¹)₂]₃·HP(O)(OR²)₂ (II)
in which the variables R, R¹ and R² independently of one another stand for aliphatic and cycloaliphatic radicals and M is titanium, zirconium or aluminium.

14. Coil coating materials according to any of Claims 6 to 13, **characterized in that** the constituents (A 2), (A 3), and (A 4) are in a weight ratio of 1:(0.5 to 1.5) : (0.1 to 2).

15. Coil coating materials according to Claim 14, **characterized in that** the weight ratio of constituent (A 1) on the one hand to constituents (A 2), (A 3), and (A 4) on the other is from 20:1 to 5:1.

16. Coil coating materials according to any of Claims 6 to 15, **characterized in that** they comprise constituent (A 2) in an amount of from 0.1 to 10% by weight, based on the solids of the coil coating material.

17. Coil coating materials according to any of Claims 8 to 16, **characterized in that** they comprise constituent (A 3) in an amount of from 0.1 to 10% by weight, based on the solids of the coil coating material.

18. Coil coating materials according to any of Claims 10 to 17, **characterized in that** they comprise constituent (A 4) in an amount of from 0.01 to 5% by weight, based on the solids of the coil coating material.

19. Coil coating materials according to any of Claims 1 to 18, **characterized in that** they are one-component systems.

20. Coil coating materials according to any of Claims 1 to 19, **characterized in that** they are curable thermally, with actinic radiation, or both thermally and with actinic radiation.

21. Coil coating materials according to any of Claims 1 to 20, **characterized in that** they are conventional or aqueous coil coating materials, substantially or completely solvent-free and water-free liquid coil coating materials (100% systems), substantially or completely solvent-free and water-free, solid pulverulent coil coating materials (powder coating materials), or an aqueous dispersion of powder coating materials (powder slurries).

22. Coil coating materials according to Claim 21, **characterized in that** they are conventional coil coating materials.

## Revendications

1. Laques de revêtement de bobines contenant au moins un pigment électriquement conductible (A 1) présentant une répartition granulométrique au moins bimodale et au moins un liant, le rapport pondéral pigment/liant étant > 1,5:1.

2. Laques de revêtement de bobines selon la revendication 1, **caractérisées en ce que** 90% en poids de la proportion de fines particules du pigment électriquement conductible (A 1) présente une grosseur moyenne des particules de 1 à 20 µm et 90% en poids de la proportion de grosses particules du pigment électriquement conductible (A 1) présente une grosseur moyenne des particules de 3 à 30 µm.

3. Laques de revêtement de bobines selon la revendication 1 ou 2, **caractérisées en ce que** le rapport pondéral de la proportion de fines particules à la proportion de grosses particules est de 2:1 à 1:2.

4. Laques de revêtement de bobines selon l'une quelconque des revendications 1 à 3, **caractérisées en ce qu'**elles contiennent le pigment électriquement conductible (A 1) en une quantité de 10 à 80% en poids, par rapport aux corps solides de la laque de revêtement de bobines.

5. Laques de revêtement de bobines selon l'une quelconque des revendications 1 à 4, **caractérisées en ce que** le pigment électriquement conductible (A 1) est choisi dans le groupe constitué par le silicium élémentaire et les phosphures métalliques, insolubles dans l'eau.

6. Laques de revêtement de bobines selon l'une quelconque des revendications 1 à 5, **caractérisées en ce qu'**elles contiennent au moins un pigment (A 2) inhibant la corrosion.

7. Laques de revêtement de bobines selon la revendication 6, **caractérisées en ce que** les pigments (A 2) inhibant la corrosion sont choisis dans le groupe constitué par le phosphate de zinc, le métaborate de zinc et le métaborate de baryum monohydraté.

8. Laques de revêtement de bobines selon l'une quelconque des revendications 1 à 7, **caractérisées en ce qu'**elles contiennent au moins un dioxyde de silicium amorphe (A 3), qui est modifié par des ions métalliques.

9. Laques de revêtement de bobines selon la revendication 8, **caractérisées en ce que** les ions métalliques dans le composé (A 3) sont choisis dans le groupe constitué par les ions des métaux alcalins, les ions des métaux alcalino-terreux, les ions de scandium, d'yttrium, et de lanthane, les ions des lanthanides ainsi que les ions de zinc et d'aluminium.

10. Laques de revêtement de bobines selon l'une quelconque des revendications 1 à 9, **caractérisées en ce qu'**elles contiennent au moins un composé (A 4) de formule générale I :
Mₙ(X)ₘ (I),
dans laquelle les variables et les indices ont la signification suivante :
M au moins un atome central, choisi dans le groupe des accepteurs de Lewis,
X des ligands donneurs de Lewis avec au moins un atome formant un pont, choisi parmi les éléments du 5ème et 6ème groupe principal du système périodique des éléments,
n 1 à 500 et
m 3 à 2000.

11. Laques de revêtement de bobines selon la revendication 10, **caractérisées en ce que** l'atome central M est choisi dans le groupe constitué par l'aluminium, le titane et le zirconium.

12. Laques de revêtement de bobines selon la revendication 10 ou 11, **caractérisées en ce que** l'atome formant un pont dans le composé (A 4) est choisi dans le groupe constitué par les atomes d'azote, de phosphore, d'oxygène et de soufre.

13. Laques de revêtement de bobines selon l'une quelconque des revendications 10 à 12, **caractérisées en ce que** le composé (A 4) est choisi dans le groupe constitué par les composés (A 4) de formule générale II :
RO-M[O-P(O)(OH)-O-P(O) (OR¹)₂]₃.HP(O)(OR²)₂ (II),
dans laquelle les variables R, R¹ et R² représentent, indépendamment l'une de l'autre, des radicaux aliphatiques et cycloaliphatiques et M est choisi parmi le titane, le zirconium et l'aluminium.

14. Laques de revêtement de bobines selon l'une quelconque des revendications 6 à 13, **caractérisées en ce que** les constituants (A 2), (A 3) et (A 4) se trouvent dans un rapport pondéral de 1:(0,5 à 1,5):(0,1 à 2).

15. Laques de revêtement de bobines selon la revendication 14, **caractérisées en ce que** le rapport pondéral du constituant (A 1) d'une part aux constituants (A 2), (A 3) et (A 4) d'autre part est de 20:1 à 5:1.

16. Laques de revêtement de bobines selon l'une quelconque des revendications 6 à 15, **caractérisées en ce qu'**elles contiennent le constituant (A 2) en une quantité de 0,1 à 10% en poids, par rapport aux corps solides de la laque de revêtement de bobines.

17. Laques de revêtement de bobines selon l'une quelconque des revendications 8 à 16, **caractérisées en ce qu'**elles contiennent le constituant (A 3) en une quantité de 0,1 à 10% en poids, par rapport aux corps solides de la laque de revêtement de bobines.

18. Laques de revêtement de bobines selon l'une quelconque des revendications 10 à 17, **caractérisées en ce qu'**elles contiennent le constituant (A 4) en une quantité de 0,01 à 5% en poids, par rapport aux corps solides de la laque de revêtement de bobines.

19. Laques de revêtement de bobines selon l'une quelconque des revendications 1 à 18, **caractérisées en ce qu'**il s'agit de systèmes à un composant.

20. Laques de revêtement de bobines selon l'une quelconque des revendications 1 à 19, **caractérisées en ce qu'**elles sont durcissables thermiquement, par un rayonnement actinique ou thermiquement et par un rayonnement actinique.

21. Laques de revêtement de bobines selon l'une quelconque des revendications 1 à 20, **caractérisées en ce qu'**elles sont des laques de revêtement de bobines classiques ou aqueuses, des laques de revêtement de bobines liquides, essentiellement ou totalement exemptes de solvants et d'eau (systèmes à 100%), des laques de revêtement de bobines solides, sous forme de poudres, essentiellement ou totalement exemptes de solvants et d'eau (laques en poudre) ou une dispersion aqueuse de laques en poudre (suspensions de poudre).

22. Laques de revêtement de bobines selon la revendication 21, **caractérisées en ce qu'**il s'agit de laques de revêtement de bobines classiques.
